# EUROPEAN PATENT APPLICATION

(11) **EP 4 814 831 A1**
(43) Date of publication of application: **30.09.2026**
(21) Application number: 25166565.9
(22) Date of filing: 27.03.2025
(51) Int. Cl.: G06Q 10/08, B65G 1/04

(54) **ROBOTIC VEHICLE CONTROL**

(71) Applicant: AutoStore Technology AS, 5578 Nedre Vats (NO)
(72) Inventor: TENGESDAL, Trym, 5578 Nedre Vats (NO)
(74) Representative: Kilburn & Strode LLP

(57) **Abstract**

The disclosure relates to a controller in an automated storage and retrieval system. The controller is configured to receive (S100) a dataset comprising one or more measurements of an elapsed time taken to perform a port procedure, retrieve (S110, S210) an initial estimate of an elapsed time in performing the port procedure, input (S115, S215) the received dataset and the retrieved initial estimate into a Kalman filter to determine an updated estimate of an elapsed time in performing the port procedure, receive (S120, S220) an indication of an initiation of a subsequent port procedure at the port, and control (S125, S225) a robotic vehicle to traverse the automated storage and retrieval system and be at the port based on the updated estimate of an elapsed time in performing the port procedure after receiving the indication of the initiation of the subsequent port procedure.

## Description

### TECHNICAL FIELD

The disclosure relates to robotic vehicle control. More particularly, it relates to controlling a robotic vehicle based on an estimate of time taken to perform a procedure at a port.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

A control system can control movement of the container-handling robotic vehicles in the automated storage and retrieval system. In some cases, routing of the container-handling robotic vehicles may be optimised to increase the efficiency of the automated storage and retrieval system.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a conceptual block diagram of a robotic vehicle control system 500;
Fig. 6 shows a flow chart of a robotic vehicle control process for the robotic vehicle control system of Fig. 5; and
Fig. 7 shows a plot of distribution of elapsed times for port procedures.

### DETAILED DESCRIPTION

In overview, the disclosure relates to a controller for controlling container collection and/or delivery by a robot in an automated storage and retrieval system.

The controller is configured to receive a dataset comprising one or more measurements of an elapsed time taken to perform a port procedure at a port of the automated storage and retrieval system.

The port procedure comprises removing or inserting one or more items from a container at a port of the automated storage and retrieval system. The port is configured for the removal and insertion of containers from the automated storage and retrieval system.

The controller is also configured to receive an initial estimate of an elapsed time taken to perform the port procedure. The controller inputs the dataset and initial estimate into a Kalman filter to determine an updated estimate of an elapsed time in performing the port procedure. This updated estimate is then used by the controller to control a robotic vehicle to arrive at the port at the time the port procedure is complete.

In this way, routing of the robotic vehicles can be improved. Updating the estimated time taken to complete a retrieval task enables a robotic vehicle to arrive at the port close to the time in which the retrieval task is complete. This increases the efficiency of the automated storage and retrieval process by reducing idle time of both robotic vehicles and operators at the port. That is, the time in which a robotic vehicle is waiting to collect/deliver a container from/to the port is reduced, and the time in which an operator is waiting for a robotic vehicle to collect/deliver a container to/from the port is reduced.

### Automated storage and retrieval system overview

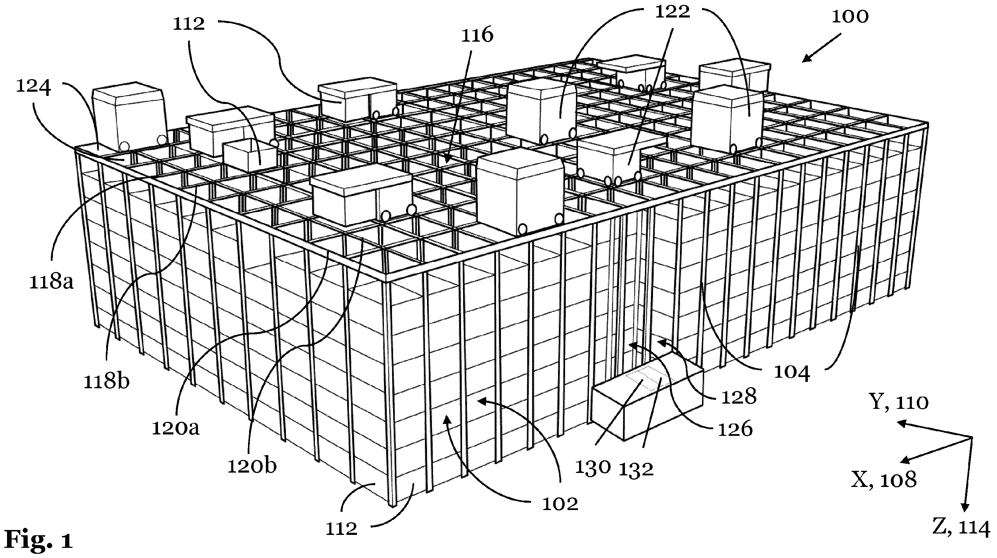

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles (interchangeably referred to as container-handling robotic vehicles), or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

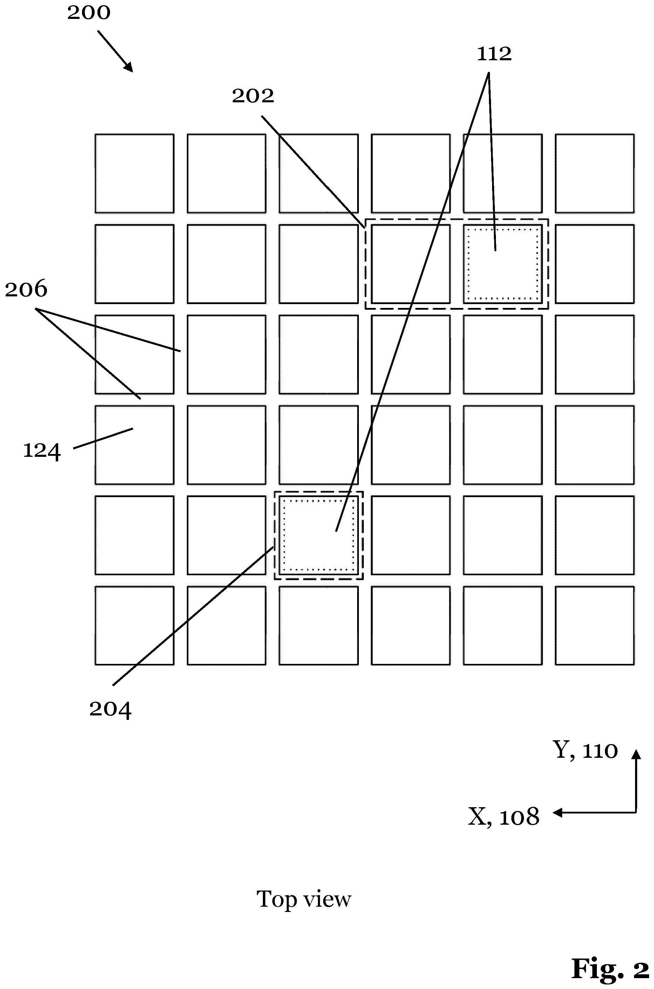

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

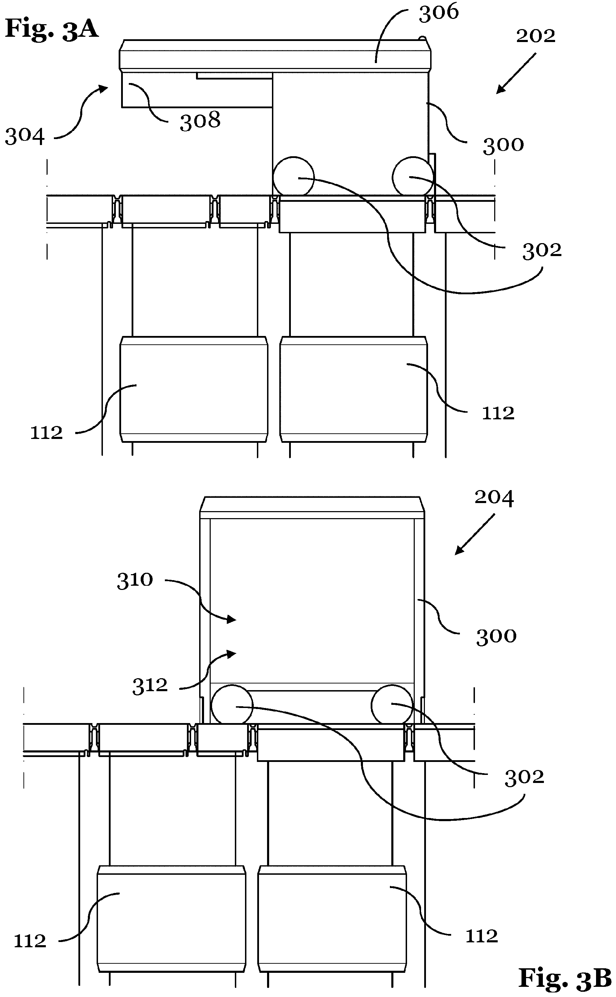

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

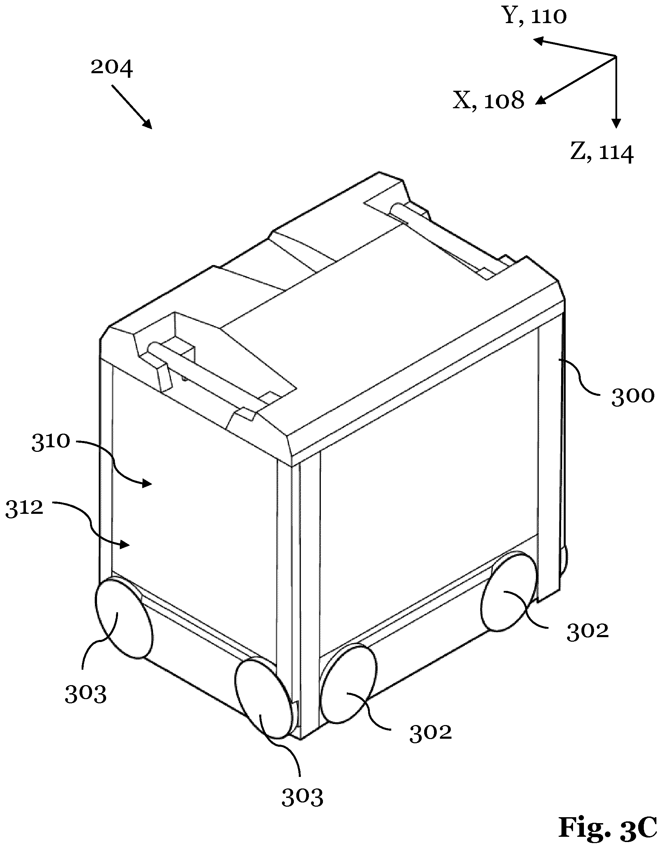

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

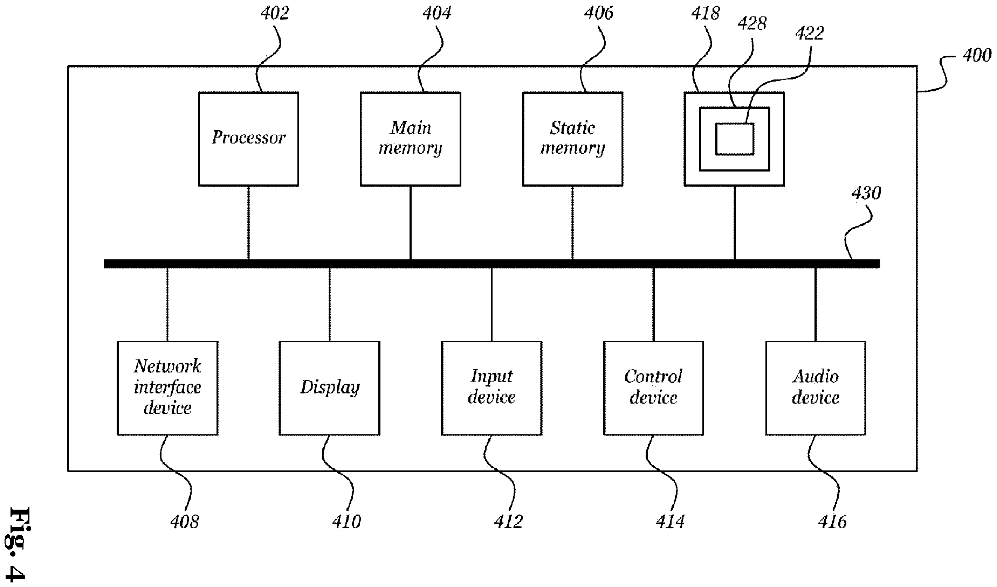

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Container Collection/Delivery Control

Within the automated storage and retrieval system, robotic vehicles may collect containers from within the storage grid, and take them to a port at a periphery of the grid. Here, an operator picks items from the container (or put items into the container), before a robotic vehicle collects the container, and places it back within the storage grid. The operator can be a human operator or a robotic item picking device, such as a picking arm.

The time taken to pick or place items to and from the containers at the port can vary drastically throughout the operation of the automated storage and retrieval system. This can cause inefficiency when controlling robotic vehicles to arrive at the port.

It is undesirable for a robotic vehicle to arrive at a port while items are still being picked from or placed into the container at the port, as the robotic vehicle will be idle until the picking or placing task is complete. Similarly, inefficiencies can arise if the picking or placing task is complete, but there is no robotic vehicle at the port to collect the container.

In an example, when items are to be picked from a plurality of containers to be combined into a single package (e.g., a shipping box, bag, envelope or the like), an operator may take longer in from the first container of the plurality due to the time taken in preparing the package. Items can be picked from the subsequent containers more quickly because the package is already prepared.

In another example, some items may take longer to pick than others. This could include delicate items that need additional packaging, or heavy items.

In another example, some port operators may not pick / place items at the same speed as other port operators (be that human or robotic item pickers/placers). Consequently, a 'one-size-fits-all' approach to item picking/placing times may not be accurate.

In another example, port operators may work at different speeds at different times of the day, such as around lunchtime, or differences between the beginning and ends of shifts.

A controller for controlling container collection and/or delivery by a robotic vehicle in an automated storage and retrieval system is provided in the present disclosure. The controller enhances container collection and delivery efficiency.

The present disclosure will now be described in general terms before implementations of the disclosure are described by way of example with reference to the drawings. The words "may" and "can" are used to refer to a feature that is optional, i.e. in some implementations of the disclosure, the feature is present, and in some implementations of the disclosure, the feature is not present.

A controller is provided. The controller can be configured to control container collection and/or delivery by a robotic vehicle in an automated storage and retrieval system.

The robotic vehicle can be a container-handling robotic vehicle.

The controller can be configured to receive a dataset comprising one or more measurements of an elapsed time taken to perform a port procedure.

The port procedure can comprise removing or inserting one or more items from/into a container at a port of the automated storage and retrieval system.

The port can be configured for the removal and insertion of containers from the automated storage and retrieval system.

The controller can be configured to retrieve an initial estimate of an elapsed time in performing the port procedure.

The controller can be configured to input the received dataset and the retrieved initial estimate into a Kalman filter.

The Kalman filter can be configured to determine an updated estimate of an elapsed time in performing the port procedure.

The controller can be configured to receive an indication of an initiation of a subsequent port procedure at the port.

The controller can be configured to control a robotic vehicle to traverse the automated storage and retrieval system. The controller can be configured to control the robotic vehicle to be at the port based on the updated estimate of an elapsed time in performing the port procedure after receiving the indication of the imitation of the subsequent port procedure.

The controller can be configured to receive a subsequent dataset comprising one or more subsequent measurements of an elapsed time taken to perform the port procedure.

The controller can be configured to input the received subsequent dataset and the updated estimate into the Kalman filter, and can determine, with the Kalman filter, a subsequent updated estimate of an elapsed time in performing the port procedure.

The subsequent dataset can comprise an elapsed time in performing the subsequent port procedure.

When controlling the robotic vehicle to traverse the automated storage and retrieval system and be at the port based on the updated estimate of an elapsed time in performing the port procedure after receiving the indication of the initiation of the subsequent port procedure, the controller can be configured to control the robotic vehicle to be available at the port to collect the container based on the updated estimate of an elapsed time in performing the port procedure after receiving indication of the initiation of the subsequent port procedure.

Additionally or alternatively, when controlling the robotic vehicle to traverse the automated storage and retrieval system and be at the port based on the updated estimate of an elapsed time in performing the port procedure after receiving the indication of the initiation of the subsequent port procedure, the controller can be configured to control the robotic vehicle to deliver a next container to the port based on the updated estimate of an elapsed time in performing the port procedure after receiving the indication of the initiation of the subsequent port procedure.

The controller can determine a target arrival time for the robotic vehicle. The target arrival time can be calculated as a time point at which the indication of the initiation of the subsequent port procedure is received plus the updated estimate of an elapsed time in performing the port procedure, and the robotic vehicle can be controlled to arrive at the port at the target arrival time.

The Kalman filter can be an adaptive Kalman filter.

The adaptive Kalman filter can have at least one tuneable parameter.

The at least one tuneable parameter may only be tuneable between predetermined threshold values.

The at least one tuneable parameter can comprise a variance value. The variance value can be indicative of a variance in elapsed time taken to perform port procedures at the port.

The at least one tuneable parameter can comprise a confidence value. The confidence value can be indicative of an accuracy in a model used in the adaptive Kalman filter and/or an accuracy in data input into the Kalman filter.

The controller can be further configured to determine a residual between the estimate of an elapsed time in performing the port procedure and measurements of the elapsed time in performing the port procedure.

The tuneable parameters can be automatically tuned based on the determined residual to reduce a subsequent residual.

The received dataset can be a first type port procedure dataset.

The port procedure can be a first type port procedure.

The initial estimate can be a first type port procedure initial estimate.

The Kalman filter can be a first Kalman filter.

The updated estimate can be a first type port procedure updated estimate.

The subsequent port procedure can be a subsequent first type port procedure.

These can each correspond to a first type of port procedure.

The controller can be configured receive a second type port procedure dataset.

The second type port procedure dataset can comprise one or more measurements of an elapsed time taken to perform a second type port procedure. The second type port procedure can comprise a type of port procedure in removing or inserting one or more items from/into a container at the port that can be different to the first type port procedure.

The controller can be configured to retrieve a second type port procedure initial estimate of an elapsed time in performing the second type port procedure.

The controller can be configured to input the received second type port procedure dataset and the retrieved second type port procedure initial estimate into a second Kalman filter.

The second Kalman filter can be configured to determine a second type port procedure updated estimate of an elapsed time in performing the second type port procedure.

The second Kalman filter can be a different Kalman filter to the first Kalman filter.

The controller can be configured to receive an indication of an initiation of a subsequent second type port procedure at the port.

The controller can be configured to control a robotic vehicle to traverse the automated storage and retrieval system and be available at the port to collect the container based on the second type port procedure updated estimate of an elapsed time in performing the second type port procedure after receiving the indication of the initiation of the subsequent second type port procedure.

The controller can be configured to receive a subsequent second type port procedure dataset comprising one or more subsequent measurements of an elapsed time taken to perform the second type port procedure.

The controller can be configured to input the received subsequent second type port procedure dataset and the second type port procedure updated estimate into the second Kalman filter.

The controller can be configured to determine, with the second Kalman filter, a subsequent second type port procedure updated estimate of an elapsed time in performing the second type port procedure.

The controller can be configured to determine whether a dataset is the first type port procedure dataset or the second type port procedure dataset.

The controller can be configured to select the first type port procedure initial estimate and the first Kalman filter when the dataset is the first type port procedure dataset.

The controller can be configured to select the second type port procedure initial estimate and the second Kalman filter when the dataset is the second type port procedure dataset.

The first type port procedure can comprise removing an item for a group of items from a first container of a predetermined group of containers.

The second type port procedure can comprise removing an item for the group of items from a non-first container of the predetermined group of containers.

The non-first container can be a container received at the port after the first container.

An automated storage and retrieval system is provided. The automated storage and retrieval system can comprise the aforementioned controller.

A method for controlling container collection and/or by a robotic vehicle in an automated storage and retrieval system is provided.

The method can comprise receiving a dataset comprising one or more measurements of an elapsed time taken to perform a port procedure.

The port procedure can comprise removing or inserting one or more items from/into a container at a port of the automated storage and retrieval system.

The port can be configured for the removal and insertion of containers from the automated storage and retrieval system.

The method can comprise retrieving an initial estimate of an elapsed time in performing the port procedure.

The method can comprise inputting the received dataset and the retrieved initial estimate into a Kalman filter.

The Kalman filter can be configured to determine an updated estimate of an elapsed time in performing the port procedure.

The method can comprise receiving an indication of an initiation of a subsequent port procedure at the port.

The method can comprise controlling a robotic vehicle to traverse the automated storage and retrieval system. The method can comprise controlling the robotic vehicle to be available at the port to collect the container based on the updated estimate of an elapsed time in performing the port procedure after receiving the indication of the initiation of the subsequent port procedure.

The method can further comprise any of the features described with reference to the provided controller, above, as appropriate.

A computer-readable medium is provided. The computer-readable medium can store instructions thereon that, when executed by one or more processors of a controller for controlling container collection and/or delivery by a robotic vehicle in an automated storage and retrieval system, can cause the controller to receive a dataset comprising one or more measurements of an elapsed time taken to perform a port procedure.

The port procedure can comprise removing or inserting one or more items from/into a container at a port of the automated storage and retrieval system.

The port can be configured for the removal and insertion of containers from the automated storage and retrieval system.

The instructions can cause the controller to retrieve an initial estimate of an elapsed time in performing the port procedure.

The instructions can cause the controller to input the received dataset and the retrieved initial estimate into a Kalman filter.

The Kalman filter can be configured to determine an updated estimate of an elapsed time in performing the port procedure.

The instructions can cause the controller to receive an indication of an initiation of a subsequent port procedure at the port.

The instructions can cause the controller to control a robotic vehicle to traverse the automated storage and retrieval system. The instructions can cause the controller to control the robotic vehicle to be available at the port to collect the container based on the updated estimate of an elapsed time in performing the port procedure after receiving the indication of the initiation of the subsequent port procedure.

The instructions can further cause the controller to perform any of the features described with reference to the provided controller, above, as appropriate.

The computer-readable medium can be a non-transitory computer-readable medium.

Each possible combination of any of the above-described features forms part of the present disclosure. A plurality of instances of any feature may also be present.

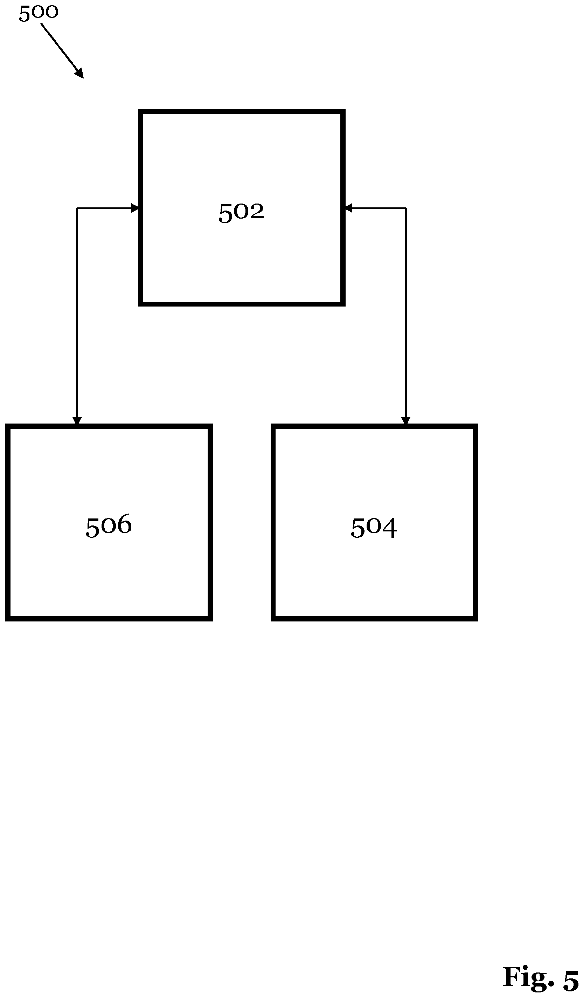

By way of example, implementations of the disclosure will now be described with reference to Figs. 5 to 7. Each possible combination of any features described below with any features described above also forms part of the disclosure.

Fig. 5 shows a conceptual block diagram of a robotic vehicle control system 500. The robotic vehicle control system 500 comprises a controller 502, a port 504, and one or more container-handling robotic vehicles 506.

The controller 502 is configured to communicate with the port 504 and the container-handling robotic vehicle(s) 506.

Communication between the controller 502 and the port 504 takes place via a communication channel therebetween. The communication channel is a wired or wireless communication channel.

Communication between the controller 502 and the container handling robotic vehicle(s) 506 (hereinafter referred to as robots, for brevity) takes place via a communication channel therebetween. The communication channel is one or more wireless connection channels (using Wi-Fi, or an IEEE 802 protocol, for example).

Each of the controller 502, the port 504, and the robots 506 may comprise a communications module configured to transmit and receive signals therebetween.

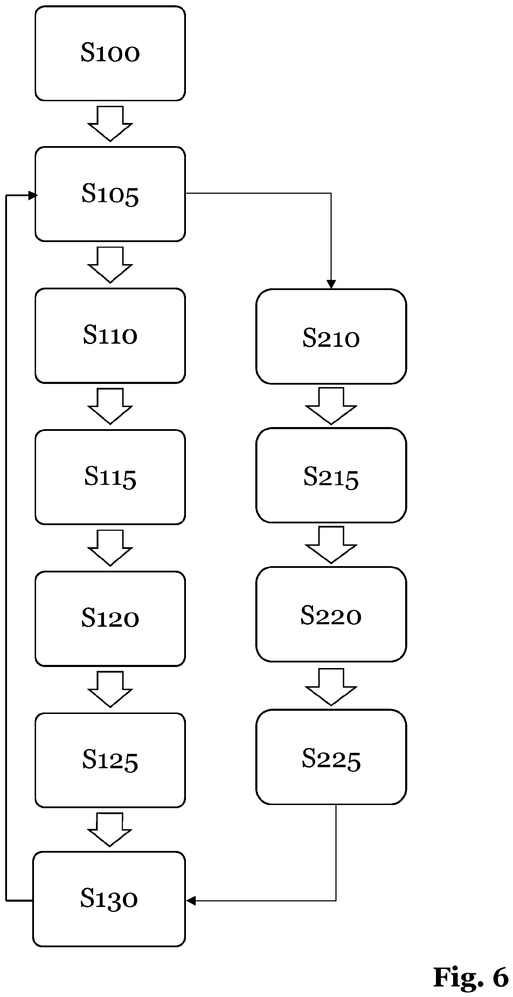

The controller is configured as one or more processors that perform the methodology subsequently described with reference to Fig. 6.

In an example, the controller 502 is a module of the control system of Fig. 4. In another example, the controller 502 is separate to, and in communication with, the control system of Fig. 4.

In an alternative, the controller 502 may be local to a robot.

In yet another implementation, the controller 502 may be local to a port 504.

Fig. 6 is a flowchart depicting exemplary actions performed by the controller 502 of Fig. 5.

At step S100, the controller 502 is configured to receive a dataset comprising one or more measurements of an elapsed time taken to perform a port procedure.

The dataset comprises measurements of historical data of elapsed time taken to perform associated port procedures.

Additionally or alternatively, the dataset comprises priming data. The priming data may be any set of time values. In a specific example, the priming data is an estimate of the time taken to perform the associated port procedure.

In some cases, where the historical data may not be available, the priming data is used. For example, this is when the port is first used, or when the port is first used under different circumstances (e.g., a new operator, or for the insertion/removal of a new type of item from the containers, etc).

A port procedure is performed at the port 504 of the automated storage and retrieval system. The port procedure comprises picking one or more items out of a container, or placing one or more items into a container. The port procedure is performed by an operator. In some examples, the operator is a human operator. In other examples the operator is an item picking robotic device, such as a robotic picking arm.

The elapsed time taken to perform the port procedure at the port of the system is measured. This elapsed time is measured at the port of the system.

In an example, a robot delivers a container to the port. The time at which this takes place is recorded by the port 502 (e.g., with a port control system). For example, a first timestamp is recorded. An operator then performs the port procedure. The time at which this procedure is complete is then recorded by the port. For example, a second timestamp is recorded. The difference in these times (i.e., the difference between the first timestamp and the second timestamp) is then used to calculate the elapsed time taken to complete the port procedure. The port (or port control system) then communicates the recorded elapsed time to the controller 502. The dataset comprises one or more measured elapsed times for performing port procedures.

At step S105, the controller 502 is configured to determine whether the received dataset is associated with a first type port procedure or a second type port procedure.

Different types of port procedures, each with different characteristics, can be performed at the port.

In an example, an operator at a port of the storage system may have a task list associated therewith. The tasks involve picking items from a plurality of containers to be combined in a box. The first task in the task list may typically have a longer elapsed time taken to complete the port procedure. This can be considered a first type port procedure.

There may be many reasons for this. In one example, the operator at the port may need to assemble a box before picking an item from a first container. This leads to a longer time taken to complete the first task.

For the remaining tasks in the task list, the box is already assembled, and thus the remaining port procedures (picking one or more items from one or more subsequent containers) have a shorter elapsed time taken to complete the port procedure. Therefore, the non-first type port procedures in a task list may be classified as a second type port procedure.

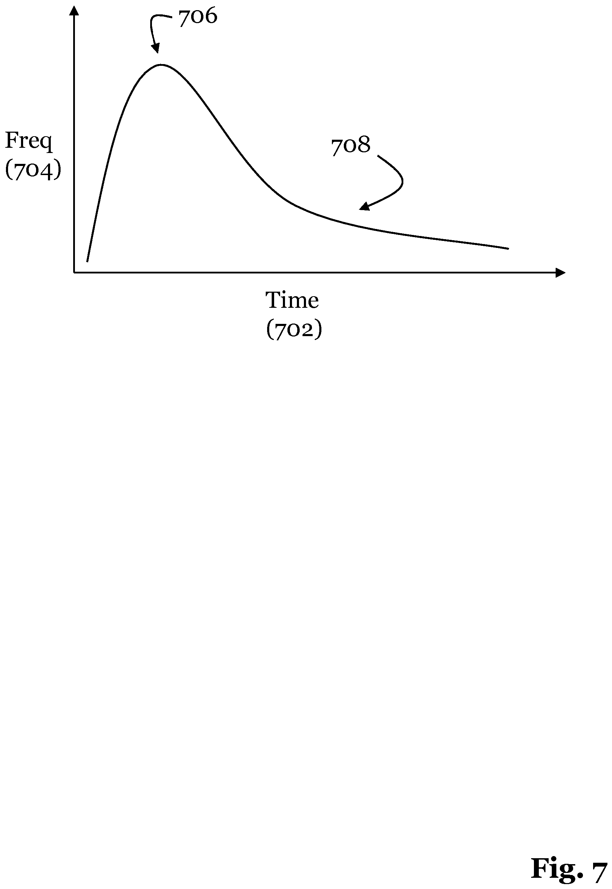

Fig. 7 shows a distribution of elapsed times for port procedures, as picking time 702 versus frequency 704, in accordance with the aforementioned example. The distribution has a peak 706 that corresponds to the second type port procedures, and a tail that corresponds to the first type port procedures.

The controller 502 controls a robot 506 to be available to collect the container from the port 504 based upon the expected time that the port procedure will be complete. Because the second type port procedures typically take less time that the first type port procedures, using a single estimate for this expected time (based on elapsed times for both the first type and second type port procedures) means that there would be an overestimate for second type port procedures, and an underestimate for first type port procedures. Consequently, the robot 506 would be waiting at the port for completion of the first type port procedure before collecting the container, and the operator would be waiting after completing the second type port procedure for the robot 506 to arrive at the port 504 to collect the container.

It will be appreciated by the skilled person that this need not be limited to a first and second type port procedure. Instead, this can be extended to any number of retrieval type procedures. As discussed, these can include, amongst others: procedures in picking or placing items from/into the container, or combining items from a plurality of containers into a single package where the picking from the first container takes longer due to time taken in preparing the package, or some items (or item types) taking longer to pick than others, or some port operators operating more quickly than others, etc.

Alternatively, there may only be one type of port procedure. In another alternative there may be more than two types of port procedure.

In some examples, the controller 502 can determine whether the dataset is associated with the first type of port procedure or the second type of port procedure based on characteristics in the elapsed time taken to complete the port procedure. In other examples, metadata included with the dataset indicates whether the dataset is associated with the first type of port procedure or the second type of port procedure.

After step S105, the flow chat diverges along two routes.

The first route (steps S110 to S125) takes place when the controller determines that the dataset is associated with the first type port procedure.

The second route (steps S210 to S225) takes place when controller determines that the dataset is associated with the second type port procedure.

It will be appreciated that each of these routes are similar, only differing by first and second.

As mentioned above, this flow chart may have any amount of routes corresponding to the steps associated with S110-S125. For example, first, second, third, fourth, fifth, and so on and so forth depending on the number of different types of port procedure.

When the controller determines that the dataset is associated with the first type port procedure, the process progresses from step S105 to S110.

At step S110, the controller 502 is configured to retrieve an initial estimate of an elapsed time in performing the first type port procedure.

In an example, the initial estimate is based on a model of expected elapsed time, however it is not limited thereto. For example, as an alternative, the model can be, for example, a gaussian distribution with the initial estimate at the mean of the gaussian. It will be appreciated that, although a gaussian may not be used, in like scenarios, it may be particularly suitable due to the nature of the task. Given enough first type port procedures, the elapsed time should conform to a gaussian distribution. However, a second type port procedure may follow a different gaussian distribution.

More generally, the initial estimate can be considered as an approximation of the expected time taken to perform the first type of port procedure. This can be based on historic data, or a user determined input.

At step S115, the controller 502 is configured to input the received dataset and the initial estimate into a first Kalman filter to determine an updated estimate of an elapsed time in performing the first type port procedure.

The updated estimate may be in the same form as the initial estimate, but with altered values. That is, for example, an altered gaussian. The updated estimate may then be the mean of the altered gaussian. Alternatively, the initial estimate and the updated estimate may be discrete values; the updated estimate being an updated discrete estimate.

In some examples, the first Kalman filter is an adaptive Kalman filter.

The adaptive Kalman filter has tuneable parameters that alter the output of the adaptive Kalman filter.

An example of a parameter may be a variance value indicative of a variance in elapsed time taken to perform the first type port procedure. That is, the time taken to complete a first type port procedure may vary over several completions. The variance over the several completions may be tracked. This variance may be variance over the received dataset.

Another example of a tuneable parameter may be a confidence value. This confidence value may be indicative of a confidence in the accuracy of the initial estimate used in the adaptive Kalman filter, and/or the confidence in the accuracy of the dataset input into the adaptive Kalman filter.

The confidence values may affect how much the initial estimate and/or the dataset is trusted when inputted into the adaptive Kalman filter. The Kalman filter can trust the values for initial estimate and/or the dataset dependent on the respective confidence intervals.

For example, the dataset may have a very low confidence value, and the initial estimate may have a very high confidence value. In this example, the Kalman filter can 'trust' the initial estimate more than the dataset. Therefore, the updated estimate may be closer to the initial estimate than the dataset.

This can also work in the reverse sense. For example, the dataset may have a high confidence value, and the initial estimate a low confidence value. In this case, the Kalman filter can trust the dataset more than the initial estimate. Therefore the updated estimate may resemble the dataset more than the initial estimate.

In another example, the respective confidence values of the dataset and the initial estimate may be roughly level. In this example, the Kalman filter does not trust either one more than the other. Therefore, both the dataset and the initial estimate are equally trusted in producing the updated estimate.

The above examples may be described by the term 'weighted average'. In this sense, more weight is given to the parameters with the higher confidence value.

The confidence values may be determined by determining a residual between the initial estimate and the dataset. The tuneable parameters may then be automatically tuned in order to reduce a subsequent residual.

For example, the confidence values may be computed by the difference in values between the initial estimate and the received dataset, also referred to as residuals. These residuals can be used to estimate a noise variance parameter. This measurement noise parameter can be a confidence value. For example, if the noise variance is very high, the confidence may be very low, and vice versa.

The tuneable parameters may be configured to vary between threshold values. In the case of an outlier, the updated estimate will not respond too drastically.

That is, if there is an outlier in the dataset, the updated estimate does not strongly reflect the outlier as the parameters were not allowed vary too drastically in response to the outlier. An outlier may happen due to multiple reasons. For example, an operator not being ready at the port, the items being picked are difficult to handle, or the operator making a mistake.

It will be understood that there may be many other tuneable parameters.

For example, the updated estimate may also be dependent on the time of day.

The updated estimate may be dependent on the specific human operator at the port.

The updated estimate may be dependent on the type of item being picked from / placed into the container.

At step S120, the controller 502 is configured to receive an indication of an initiation of a subsequent first type port procedure at the port 504.

As mentioned before, the port can track when a port procedure begins and ends. At this step, when a subsequent first type port procedure begins, information may be communicated to the controller 502 that the subsequent first type port procedure has begun.

At step S125, the controller 502 is configured to control a robotic vehicle 506 to traverse the automated storage and retrieval system and be at the port 504 based on the updated estimate of the elapsed time in performing the first type port procedure, after receiving the indication of the initiation of the subsequent first type port procedure.

That is, the controller 502 adds the updated estimate of the elapsed time in performing the first type port procedure to a timestamp of when the subsequent first type port procedure has begun. This provides an estimated completion time of the subsequent first type port procedure. The controller then instructs a robotic vehicle to be available at the port to collect the container and/or deliver a next container at this estimated completion time of the subsequent first type port procedure.

By doing this, the robotic vehicle 506 arrives at the port 504 approximately at the time that the subsequent first type port procedure is concluding. In this way, the robotic vehicle 506 waiting time for the operator to complete the subsequent port procedure is minimised. Likewise, waiting time by the operator for the robotic vehicle 506 to arrive is minimised.

Following step S125, the procedure continues to step S130.

Returning to step S105, when the controller 502 determines that the dataset is associated with the first type port procedure, the process progresses from step S105 to S210.

At step S210, the controller 502 is configured to retrieve an initial estimate of an elapsed time in performing the second type port procedure.

Step S210 is substantially the same as step S110, but for the second type port procedure instead of the first type port procedure. The same teaching therefore applies but is not repeated for brevity.

At step S215, the controller 502 is configured to input the received dataset and the initial estimate of the second type port procedure into a second Kalman filter.

The controller is configured to determine an updated estimate of the elapsed time in performing the second type port procedure.

The teaching above regarding the first Kalman filter also applies to the second Kalman filter and is not repeated for brevity. It is noted, however, that the second Kalman filter is only used for the second type port procedures so as to not conflate the first type port procedures and the second type port procedures when determining updated estimates of elapsed times for the port procedures. The second Kalman filter can be an adaptive Kalman filter (i.e., a second adaptive Kalman filter) in a corresponding manner to that described with reference to the first Kalman filter.

At step S220, the controller 502 is configured to receive an indication of the initiation of a subsequent second type port procedure.

Step S220 is substantially the same as step S120, but for the second type port procedure instead of the first type port procedure. The same teaching therefore applies but is not repeated for brevity.

At step S225, the controller 502 is configured to control a robotic vehicle 506 to traverse the automated storage and retrieval system and be at the port 504 based on the updated estimate of the elapsed time in performing the second type port procedure, after receiving the indication of the initiation of the subsequent second type port procedure.

Step S225 is substantially the same as step S125, but for the second type port procedure instead of the first type port procedure. The same teaching therefore applies but is not repeated for brevity.

Following step S225, the procedure continues to step S130.

At step S130, the controller 502 is configured to receive a subsequent dataset comprising one or more subsequent measurements of an elapsed time taken to perform a port procedure.

The subsequent dataset may comprise an elapsed time taken to perform the subsequent port procedure (at step S120 / S220). The subsequent dataset may comprise an elapsed time taken to perform other port procedures not including the subsequent port procedure (at step S120 / S220).

The process may then continue in a recursive manner, with the estimate being continuously updated. It will be understood that step S130 is where the routes of the flowchart recombine.

In this regard, the process then loops back to step S105.

When the subsequent dataset is determined to be associated with the first type port procedure, the process continues to step S110. In this case, the initial estimate that is retrieved is the updated estimate of the elapsed time in performing the first type port procedure, from the preceding loop through the route of steps S110 to S125. That is, the previous updated estimate of the elapsed time in performing the first type port procedure and the new dataset associated with the first type port procedure are input to the first Kalman filter. The first Kalman filter then determines and outputs a new updated estimate of the elapsed time in performing the first type port procedure.

When the subsequent dataset is determined to be associated with the second type port procedure, the process continues to step S210. In this case, the initial estimate that is retrieved is the updated estimate of the elapsed time in performing the second type port procedure, from the preceding loop through the route of steps S210 to S225. That is, the previous updated estimate of the elapsed time in performing the second type port procedure and the new dataset associated with the second type port procedure are input to the second Kalman filter. The second Kalman filter then determines and outputs a new updated estimate of the elapsed time in performing the Kalman type port procedure.

In this way, the process loops and continuously revises the estimate of the elapsed time in performing the port procedure.

In some cases, the subsequent dataset comprises the elapsed time taken to perform the subsequent port procedure in addition to one or more measurements received at step S100. In an example useful for understanding, the received dataset at step S100 may comprise 20 measurements. The 1^{st} measurement may be the most recent measurement, and the 20^{th} measurement may be the least recent measurement. At step S130, the subsequent dataset may be substantially identical to the received dataset at S100, but differing by the most recent measurement. In more detail, the 1^{st} measurement is replaced by the most recent measurement, and the 19^{th} most recent measurement becomes the 20^{th} most recent measurement within the subsequent dataset. In this sense, the dataset may be understood as a "moving window" of measurements. Therefore, the initial estimate may be continuously updated throughout the operation of the automated storage and retrieval system.

In examples which have only one type of port procedure, step S105 and steps S210 to S225 are forgone. In such a case, the flow chart will have a single route. In such a case, step S130 can loop back to step S110.

In some examples, the recursive effect looping back from step S130 may not be included.

It will be understood that the automated storage and retrieval system may comprise a plurality of ports configured as described throughout the disclosure. A single controller may communicate with each port and carry out the steps of the methods described herein. Alternatively, a single controller may be responsible for a single port, and there may be a plurality of controllers. Additionally or alternatively, a single controller may be responsible for a plurality of ports, and there may be a plurality of controllers.

The process described with reference to Fig. 6 may be applied uniquely to each port. In other words, each port is separately controlled according to Fig. 6, with unique estimations of elapsed time in performing port procedure applied to each port in the system.

Alternatively, the process described with reference to Fig. 6 may be collectively applied to all ports. In other words, the same estimation of elapsed time in performing port procedures is applied to all ports in the system.

In another alternative, the process described with reference to Fig. 6 may be applied to groups of ports. In other words, the same estimation of elapsed time in performing port procedures is applied to all ports in the same group of ports.

Whilst the forgoing examples have been described with reference to a robotic vehicle, there may be many types of robotic vehicle operating in the automated storage and retrieval system. At step S125, controlling a robotic vehicle to arrive at the port based on the updated estimate may be based upon the type of robotic vehicle. In more detail, some robotic vehicles may traverse the automated storage and retrieval system faster than others. Therefore, the controller may be configured to control a faster robot closer to the time in which it is needed at the port.

The controller may control a robotic vehicle dependent on how far the robotic vehicle is from the port, giving more time if it is further away.

In some examples, there is not a single robotic vehicle assigned to a specific port. As such, the controller may be configured to pick a robotic vehicle of a plurality of robotic vehicles to arrive at the port.

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A controller for controlling container collection and/or delivery by a robotic vehicle in an automated storage and retrieval system, wherein the controller is configured to:
receive a dataset comprising one or more measurements of an elapsed time taken to perform a port procedure, wherein the port procedure comprises removing or inserting one or more items from/into a container at a port of the automated storage and retrieval system configured for the removal and insertion of containers from the automated storage and retrieval system;
retrieve an initial estimate of an elapsed time in performing the port procedure;
input the received dataset and the retrieved initial estimate into a Kalman filter, wherein the Kalman filter is configured to determine an updated estimate of an elapsed time in performing the port procedure;
receive an indication of an initiation of a subsequent port procedure at the port; and
control a robotic vehicle to traverse the automated storage and retrieval system and be at the port based on the updated estimate of an elapsed time in performing the port procedure after receiving the indication of the initiation of the subsequent port procedure.

2. The controller of claim 1, wherein the controller is further configured to:
receive a subsequent dataset comprising one or more subsequent measurements of an elapsed time taken to perform the port procedure;
input the received subsequent dataset and the updated estimate into the Kalman filter; and
determine, with the Kalman filter, a subsequent updated estimate of an elapsed time in performing the port procedure.

3. The controller of claim 2, wherein the subsequent dataset comprises an elapsed time in performing the subsequent port procedure.

4. The controller of any preceding claim, wherein when controlling the robotic vehicle to traverse the automated storage and retrieval system and be at the port based on the updated estimate of an elapsed time in performing the port procedure after receiving the indication of the initiation of the subsequent port procedure, the controller is configured to:
control a robotic vehicle to be available at the port to collect the container based on the updated estimate of an elapsed time in performing the port procedure after receiving the indication of the initiation of the subsequent port procedure; and/or
control a robotic vehicle to deliver a next container to the port based on the updated estimate of an elapsed time in performing the port procedure after receiving the indication of the initiation of the subsequent port procedure.

5. The controller of any preceding claim, wherein the Kalman filter is an adaptive Kalman filter.

6. The controller of claim 5, wherein the adaptive Kalman filter has at least one tuneable parameter.

7. The controller of claim 6, wherein the at least one tuneable parameter is only tuneable between predetermined threshold values.

8. The controller of any one of claims 5 to 7, wherein the controller is further configured to:
determine a residual between the estimate of an elapsed time in performing the port procedure and measurements of elapsed time in performing the port procedure;
wherein the tuneable parameters are automatically tuned based on the determined residual to reduce a subsequent residual.

9. The controller of any preceding claim, wherein the received dataset is a first type port procedure dataset, the port procedure is a first type port procedure, the initial estimate is a first type port procedure initial estimate, the Kalman filter is a first Kalman filter, the updated estimate is a first type port procedure updated estimate, the subsequent port procedure is a subsequent first type port procedure, each corresponding to a first type of port procedure; and
the controller is further configured to:
receive a second type port procedure dataset comprising one or more measurements of an elapsed time taken to perform a second type port procedure, wherein the second type port procedure comprises a type of port procedure in removing or inserting one or more items from/into a container at the port that is different to the first type port procedure;
retrieve a second type port procedure initial estimate of an elapsed time in performing the second type port procedure;
input the received second type port procedure dataset and the retrieved second type port procedure initial estimate into a second Kalman filter, wherein the second Kalman filter is configured to determine a second type port procedure updated estimate of an elapsed time in performing the second type port procedure;
receive an indication of an initiation of a subsequent second type port procedure at the port;
control a robotic vehicle to traverse the automated storage and retrieval system and be at the port based on the second type port procedure updated estimate of an elapsed time in performing the second type port procedure after receiving the indication of the initiation of the subsequent second type port procedure.

10. The controller of claim 9, wherein the controller is further configured to:
receive a subsequent second type port procedure dataset comprising one or more subsequent measurements of an elapsed time taken to perform the second type port procedure;
input the received subsequent second type port procedure dataset and the second type port procedure updated estimate into the second Kalman filter; and
determine, with the second Kalman filter, a subsequent second type port procedure updated estimate of an elapsed time in performing the second type port procedure.

11. The controller of claim 9 or claim 10, wherein the controller is further configured to determine whether a dataset is the first type port procedure dataset or the second type port procedure dataset; and
select the first type port procedure initial estimate and the first Kalman filter when the dataset is the first type port procedure dataset; and
select the second type port procedure initial estimate and the second Kalman filter when the dataset is the second type port procedure dataset.

12. The controller of any one of claims 9 to 11, wherein:
the first type port procedure comprises removing an item for a group of items from a first container of a predetermined group of containers; and
the second type port procedure comprises removing an item for the group of items from a non-first container of the predetermined group of containers, wherein the non-first container is a container received at the port after the first container.

13. An automated storage and retrieval system comprising the controller of any preceding claim.

14. A method for controlling container collection and/or delivery by a robotic vehicle in an automated storage and retrieval system, wherein the method comprises:
receiving a dataset comprising one or more measurements of an elapsed time taken to perform a port procedure, wherein the port procedure comprises removing or inserting one or more items from/into a container at a port of the automated storage and retrieval system configured for the removal and insertion of containers from the automated storage and retrieval system;
retrieving an initial estimate of an elapsed time in performing the port procedure;
inputting the received dataset and the retrieved initial estimate into a Kalman filter, wherein the Kalman filter is configured to determine an updated estimate of an elapsed time in performing the port procedure;
receiving an indication of an initiation of a subsequent port procedure at the port; and
controlling a robotic vehicle to traverse the automated storage and retrieval system and be at the port based on the updated estimate of an elapsed time in performing the port procedure after receiving the indication of the initiation of the subsequent port procedure.

15. A computer-readable medium storing instructions that, when executed by one or more processors of a controller for controlling container collection and/or delivery by a robotic vehicle in an automated storage and retrieval system, cause the one or more processors to:
receive a dataset comprising one or more measurements of an elapsed time taken to perform a port procedure, wherein the port procedure comprises removing or inserting one or more items from/into a container at a port of the automated storage and retrieval system configured for the removal and insertion of containers from the automated storage and retrieval system;
retrieve an initial estimate of an elapsed time in performing the port procedure;
input the received dataset and the retrieved initial estimate into a Kalman filter, wherein the Kalman filter is configured to determine an updated estimate of an elapsed time in performing the port procedure;
receive an indication of an initiation of a subsequent port procedure at the port; and
control a robotic vehicle to traverse the automated storage and retrieval system and be at the port based on the updated estimate of an elapsed time in performing the port procedure after receiving the indication of the initiation of the subsequent port procedure.
